# EUROPEAN PATENT APPLICATION

(11) **EP 3 239 899 A1**
(43) Date of publication of application: **01.11.2017**
(21) Application number: 17165952.7
(22) Date of filing: 11.04.2017
(51) Int. Cl.: G06K 9/00, B60K 28/06

(54) **DETERMINATION APPARATUS, DETERMINATION METHOD, AND RECORDING MEDIUM STORING DETERMINATION PROGRAM**

(30) Priority: 28.04.2016 JP 2016091758
(71) Applicant: Panasonic Intellectual Property Management Co., Ltd., Osaka-shi, Osaka 540-6207 (JP)
(72) Inventor: NORIDOMI, Shuzo, Osaka-shi, Osaka 540-6207 (JP); ARATA, Koji, Osaka-shi, Osaka 540-6207 (JP)
(74) Representative: Grünecker Patent- und Rechtsanwälte PartG mbB

(57) **Abstract**

A determination apparatus includes: an inputter that receives image information captured by a camera; and a controller that detects a face direction angle of a person while detecting a position of a predetermined body parts of the person based on the image information, and determines a looking-back motion when the face direction angle is larger than a predetermined angle and the predetermined body parts is present in a predetermined position.

## Description

### BACKGROUND

### 1. Technical Field

The present disclosure relates to a determination apparatus, a determination method, and a recording medium storing a determination program.

### 2. Description of the Related Art

In recent years, a technique of estimating a state of a driver of a vehicle, for example, based on an image captured by a camera has been gathering attention. In particular, a method of detecting a motion of a driver such as looking aside while driving has been regarded as very important. For this reason, various researches on the method have been conducted.

For example, Japanese Unexamined Patent Application Publication No. 2011-159214 discloses a technique with which, from a face region in an image in which the face of a driver is captured, feature points of the eyes, the nose, the mouth, and the like are extracted, and based on moving amounts of flows of the feature points in time series, a looking-back motion of the driver is estimated.

### SUMMARY

However, with the technique disclosed in Japanese Unexamined Patent Application Publication No. 2011-159214, feature points have to be extracted from a face region of a person. When the person greatly rotates his or her head, for example, feature points of the eyes, the nose, the mouth, and the like become invisible, disabling calculation of flows of the feature points. For this reason, there has been a problem that determination accuracy is worsened when the person is looking back.

One non-limiting and exemplary embodiment facilitates providing a determination apparatus, a determination method, and a recording medium storing a determination program that can determine a looking-back motion of a person even when there is a looking-back motion accompanied by a great rotation of the head.

In one general aspect, the techniques disclosed here feature a determination apparatus including: an inputter that receives image information captured by a camera; and a controller that detects a head pose (a face direction angle) of a person while detecting a position of a predetermined body parts (body portion) of the person based on the image information, and determines a looking-back motion when the head pose is larger than a predetermined angle and the predetermined body parts is present in a predetermined position.

It should be noted that general or specific embodiments may be implemented as a system, a method, an integrated circuit, a computer program, a storage medium, or any selective combination thereof.

According to the present disclosure, a looking-back motion of a person can be determined even when there is a looking-back motion accompanied by a great rotation of the head.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a side view schematically illustrating an interior of a vehicle;
Fig. 2 is a top view schematically illustrating the interior of the vehicle;
Fig. 3 is a block diagram illustrating an outline of a determination apparatus;
Fig. 4 is a block diagram illustrating a detail of a controller;
Fig. 5 is a flow diagram illustrating an example of an operation of the determination apparatus;
Fig. 6 is a timing diagram illustrating a determination result of a looking-back motion in a case where control illustrated in Fig. 5 is performed;
Fig. 7A is an explanatory diagram illustrating detection of a driver's head pose and schematically illustrating a state of the head of the driver viewed from right above;
Fig. 7B is an explanatory diagram illustrating detection of a driver's head pose and illustrating a driver's face image captured by a camera;
Fig. 8 is an explanatory diagram illustrating a positional relationship between the head of the driver and a predetermined region;
Fig. 9 is an explanatory diagram illustrating a state in which the head of the driver is present in the predetermined region; and
Fig. 10 is an explanatory diagram illustrating a hardware configuration of a computer implementing a function of each unit with a program.

### DETAILED DESCRIPTION

Embodiments of the present disclosure will be described below with reference to the drawings. However, in each of the embodiments, components having the same function are denoted by the same reference characters and overlapping descriptions will be omitted.

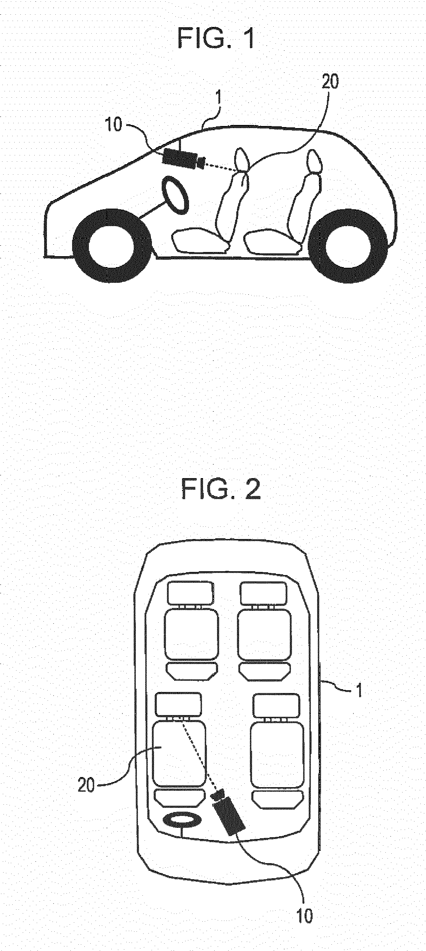

Firstly, an installation position of a camera 10 included in a vehicle 1 according to an embodiment of the present disclosure will be described with reference to Figs. 1 and 2. Fig. 1 is a side view schematically illustrating an interior of the vehicle 1. Fig. 2 is a top view schematically illustrating the interior of the vehicle 1.

As illustrated in Figs. 1 and 2, the camera 10 is installed on the front side of a driver's seat 20 and on a ceiling of the interior of the vehicle 1. The camera 10 is a camera, such as a stereo camera or a time of flight (TOF) camera, that can capture an infrared image and a distance image at the same time, for example. Furthermore, as illustrated in Figs. 1 and 2, the camera 10 is installed so as to face the driver's seat 20. More specifically, the camera 10 is tilted towards the driver's seat 20 as illustrated in Fig. 2 and tilted downward as illustrated in Fig. 1. The vehicle 1 is an automobile, for example.

The camera 10 thus installed in the interior of the vehicle captures the driver seated in the driver's seat 20 and outputs a captured image to a determination apparatus 100 which will be described later. The determination apparatus 100 is installed in a predetermined location in the vehicle 1 and connected to the camera 10. A connection method between the camera 10 and the determination apparatus 100 may be any of wired, wireless, or a combination thereof.

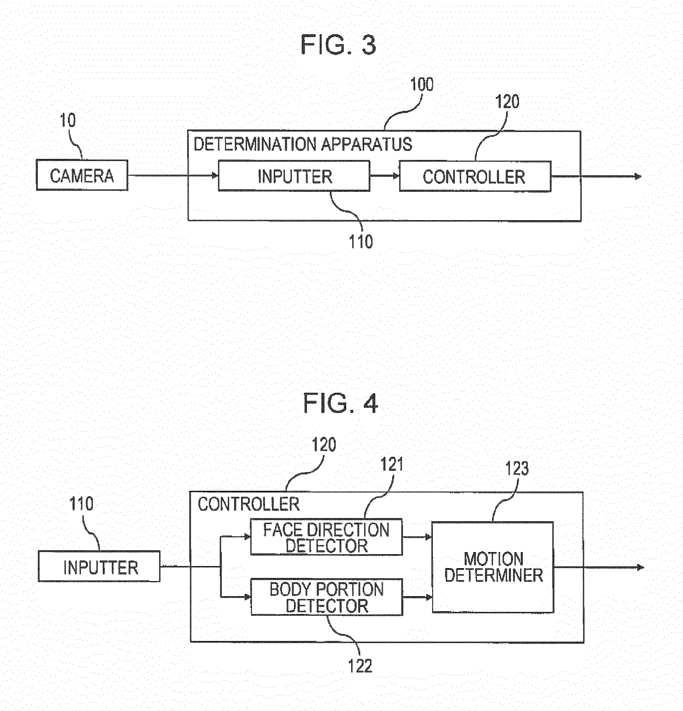

Next, a configuration of the determination apparatus 100 according to the present embodiment will be described with reference to Fig. 3. Fig. 3 is a block diagram illustrating an example of a configuration of the determination apparatus 100.

The determination apparatus 100 is an apparatus that determines a looking-back motion of the driver based on the image captured by the camera 10. As illustrated in Fig. 3, the determination apparatus 100 includes an inputter 110 and a controller 120.

The inputter 110 receives the image captured by the camera 10 and outputs a face image and a distance image to the controller 120. The face image is an image in which the face of the driver who drives the vehicle 1 is captured and the distance image is an image in which a predetermined range in the interior of the vehicle is captured.

Based on the face image and the distance image received from the inputter 110, the controller 120 detects a face direction angle of a person while detecting a position of a predetermined body parts of the person. The controller 120 determines a looking-back motion when the face direction angle is larger than a predetermined angle and the predetermined body parts is present in a predetermined position. With this, a looking-back motion of a person can be determined even when there is a looking-back motion accompanied by a great rotation of the head.

In the present embodiment, descriptions are made taking an example in which a person whose looking-back motion is determined by the controller 120 is a driver of an automobile. However, the person whose looking-back motion is determined is not limited thereto. The person whose looking-back motion is determined may be a crew (a pilot or a fellow passenger) of a moving body other than an automobile (for example, a two-wheeler, a railroad vehicle, or an airplane), and may not be a crew of a moving body. The determination apparatus 100 thus may be mounted in a moving body, and may be mounted in a fixture (for example, a building, a wall surface of a room, or the like).

Next, an example of a configuration of the controller 120 illustrated in Fig. 3 will be described with reference to Fig. 4. Fig. 4 is a block diagram illustrating an example of a configuration of the controller 120.

As illustrated in Fig. 4, the controller 120 includes a face direction detector 121, a body parts detector 122, and a motion determiner 123. Each of the units will be described below.

Based on a positional relationship among the portions such as the eyes, the nose, and the mouth (hereinafter, referred to as "face portions") in the face image received from the inputter 110, the face direction detector 121 detects a face direction angle (or head pose) in the face image. Details of detection of the face direction angle will be described later.

Furthermore, the face direction detector 121 determines presence or absence of a possibility of a looking-back motion from the detected face direction angle. The face direction detector 121 further outputs a determination result of presence or absence of a possibility of a looking-back motion to the motion determiner 123.

The body parts detector 122 receives the distance image of a predetermined region in the interior space of the vehicle from the inputter 110 and detects a position of the predetermined body parts of the person based on the received distance image. Specifically, the body parts detector 122 detects that a predetermined object is present in the predetermined region based on the distance image received from the inputter 110. At this point, the predetermined object is an object assumed to be the head or the shoulder of a crew. Details of detection of body partss will be described later.

The body portion detector 122 further outputs a detection result to the motion determiner 123.

The motion determiner 123 determines presence or absence of a looking-back motion of the driver based on the determination result from the face direction detector 121 and the detection result from the body portion detector 122.

The motion determiner 123 further outputs the determination result to a device controller which is not illustrated. The output result is used by an application for looking-aside detection or back-side checking, for example.

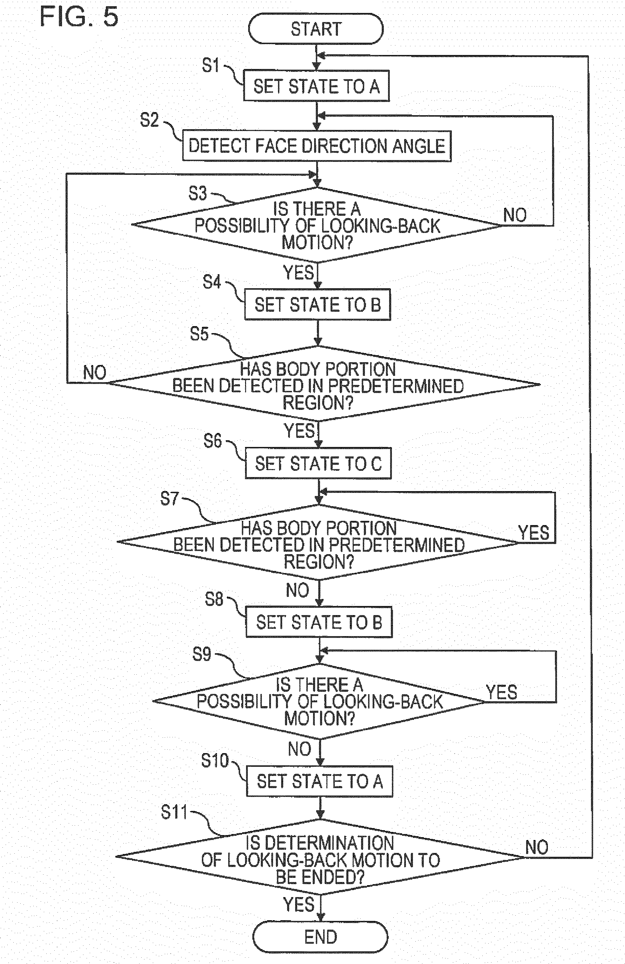

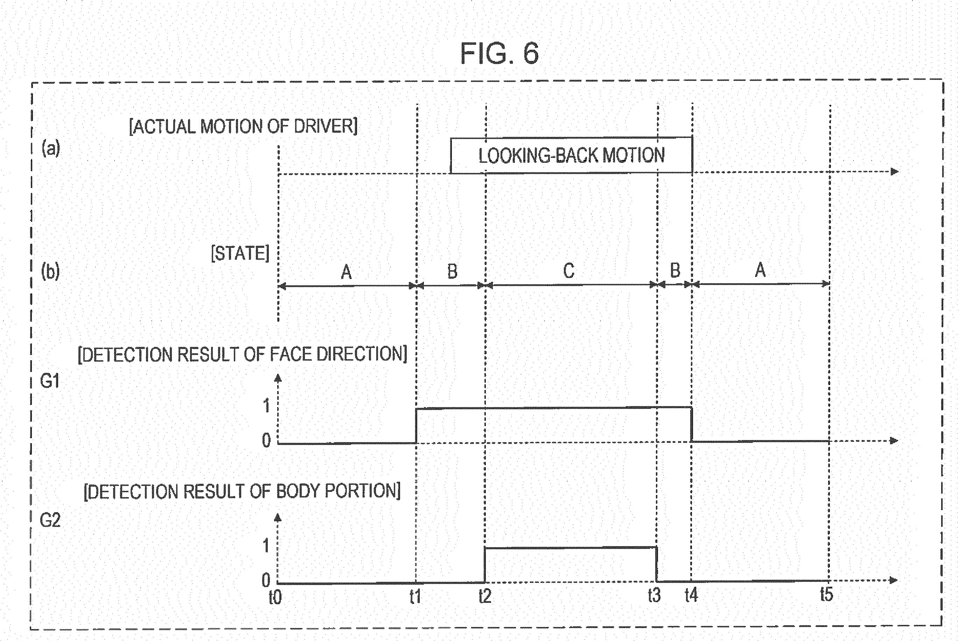

Next, operations of the controller 120 will be described with reference to Figs. 5 and 6. Fig. 5 is a flow diagram illustrating an example of operations of the controller 120. Fig. 6 is a timing diagram illustrating a transition of state setting in the motion determiner 123 when a determination of a looking-back motion is performed in accordance with the flow diagram illustrated in Fig. 5.

The motion determiner 123 determines three states of a state A, a state B, and a state C by combining the detection result from the face direction detector 121 and the detection result from the body portion detector 122.

At this point, the state A is a state that is set when the face direction detector 121 has determined that there is not a possibility of a looking-back motion and the body portion detector 122 has not detected presence of the predetermined object in the predetermined region.

The state B is a state that is set when the face direction detector 121 has determined that there is a possibility of a looking-back motion and the body portion detector 122 has not detected presence of the predetermined object in the predetermined region.

The state C is a state that is set when the face direction detector 121 has determined that there is a possibility of a looking-back motion and the body portion detector 122 has detected presence of the predetermined object in the predetermined region.

Along with the flow diagram illustrated in Fig. 5, details of control performed by the controller 120 will be described. At Step S1, the motion determiner 123 sets a state to the state A.

At Step S2, the face direction detector 121 receives a face image (a face image of a driver P1 seated in the driver's seat 20 that has been captured by the camera 10) from the inputter 110 and detects a face direction angle of the driver P1 based on a positional relationship of face portions in the face image.

For example, the face direction detector 121 extracts feature points corresponding to the face portions from the face image of the driver P1 and calculates the face direction angle of the driver P1 based on a positional relationship of the face portions indicated by the feature points. The face direction angle can be detected by using a pose from orthography and scaling with iterations (POSIT) algorithm which is a publicly-known technique.

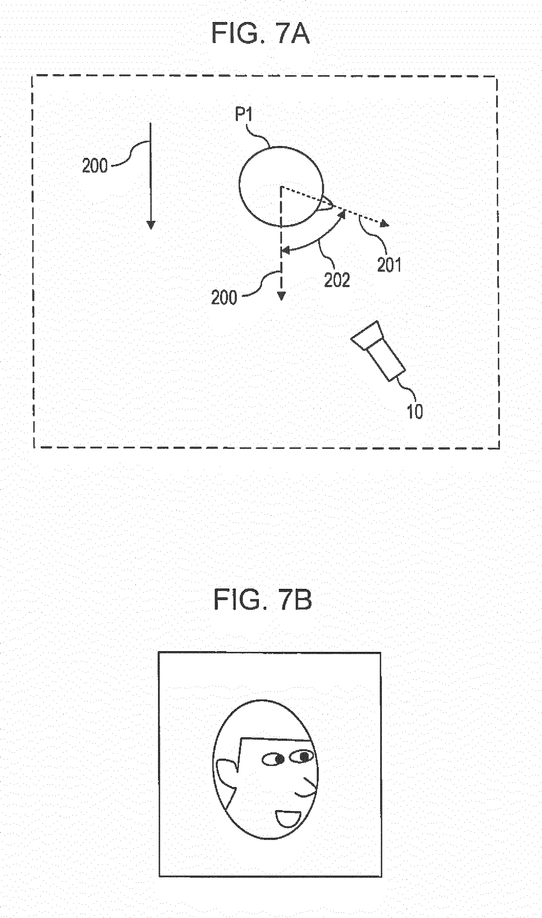

At this point, Fig. 7A is a diagram illustrating an example of a face direction of the driver P1 and illustrating a state of the head of the driver P1 viewed from right above. Fig. 7B is a diagram illustrating an example of a face image of the driver P1 that has been captured by the camera 10 when the face direction of the driver P1 is as illustrated in Fig. 7A.

As illustrated in Fig. 7A, when the face direction of the driver P1 corresponds to a face direction 201 which is greatly rotated in the left direction from a vehicle advancing direction 200 to exceed the direction of the camera 10, the face image of the driver P1 captured by the camera 10 is to be a face image a large part of which is occupied by the right half of the face, as illustrated in Fig. 7B.

The face direction detector 121 detects a face direction angle 202 illustrated in Fig. 7A by using the above-described algorithm based on a face image as illustrated in Fig. 7B.

At Step S3, the face direction detector 121 determines whether the detected face direction angle 202 is larger than a predetermined angle. When the face direction angle 202 is larger than the predetermined angle, the face direction detector 121 determines that there is a possibility of a looking-back motion (Yes at Step S3) and outputs the result to the motion determiner 123.

At Step S4, the motion determiner 123 sets the state to the state B.

On the other hand, when the face direction angle 202 detected at Step S3 is equal to or smaller than the predetermined angle, the face direction detector 121 determines that there is not a possibility of a looking-back motion (No at Step S3) and the process returns to Step S2. In this case, the motion determiner 123 maintains the state A.

At this point, as a predetermined angle, a face direction angle is set that can be taken by the driver P1 in the course of making a looking-back motion and is in a range in which feature points of the face can be extracted from the face image of the driver P1. The predetermined angle is set to 50 degrees, for example.

A reason why a face direction angle that is in a range in which feature points of the face can be extracted from the face image of the driver P1 is set as a predetermined angle is as follows. That is, when the driver P1 makes a looking-back motion, a great rotation of the head of the driver P1 disables extraction of feature points such as the eyes, the nose, and the mouth from the face image. For this reason, a possibility of a looking-back motion is determined in a range in which feature points of the face can be extracted from the face image of the driver P1.

At Step S5 subsequent to Step S4, the body parts detector 122 receives the distance image in the interior space of the vehicle from the inputter 110 and detects that the predetermined object is present in the predetermined region. The predetermined object is an object assumed to be the head or the shoulder of the driver P1.

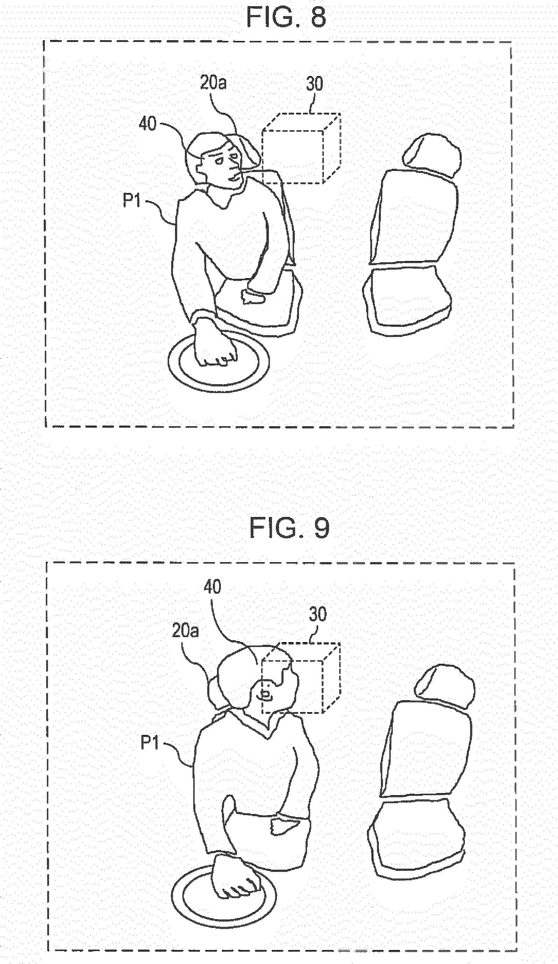

At this point, with reference to Figs. 8 and 9, the predetermined region will be described. Fig. 8 is a diagram illustrating a positional relationship between the driver P1 and a predetermined region 30 when viewing the interior of the vehicle substantially from the front. Fig. 9 is a diagram illustrating a state in which the head of the driver P1 is present in the predetermined region 30.

As illustrated in Fig. 8, the driver P1 is seated in the driver's seat 20. As the predetermined region 30, a region is set in which the head or the shoulder of the driver P1 is included when the driver P1 makes a looking-back motion.

The predetermined region 30 has a rectangular parallelepiped shape the size of which corresponds to a head 40 of the driver P1, as illustrated in Fig. 8, for example, and is set to right beside a head rest 20a of the driver's seat 20 at the side of the assistant driver's seat or to 10 cm rear, for example, of right beside the head rest 20a at the side of the assistant driver's seat.

When the head 40 of the driver P1 is present in a position illustrated in Fig. 9, for example, the body parts detector 122 detects that the head 40 of the driver P1 is present in the predetermined region 30.

The description of the predetermined region is completed, and now back to the description of Step S5.

At Step S5, specifically, the body parts detector 122 converts each of all pixel values representing the predetermined object in the distance image into a set of three-dimensional coordinates and determines whether each set of three-dimensional coordinates is included in the predetermined region 30.

When the total number of pixels determined to be included in the predetermined region 30 is larger than a predetermined number of pixels, the body parts detector 122 determines that the predetermined object is present in the predetermined region 30 and thus detects presence of the predetermined object (Yes at Step S5) and outputs a result therefrom to the motion determiner 123.

At this point, as a predetermined number of pixels, a number of pixels in a part corresponding to a surface of the head or the shoulder of the driver P1 is set, the head or the shoulder being assumed to be included in the predetermined region 30 when the driver P1 makes a looking-back motion.

At Step S5, when presence of the predetermined object has not been detected in the predetermined region 30, the process returns to Step S3.

On the other hand, at Step S5, when presence of the predetermined object has been detected in the predetermined region 30, the process proceeds to Step S6. At Step S6, the motion determiner 123 sets the state to the state C.

At Step S7 subsequent to Step S6, the body parts detector 122 determines whether the predetermined object is present in the predetermined region 30 with the same method as in Step S5. When presence of the predetermined object has been detected in the predetermined region 30 (Yes at Step S7), Step S7 is repeated.

On the other hand, when presence of the predetermined object is not detected anymore in the predetermined region 30 (No at Step S7), the process proceeds to Step S8. At Step S8, the motion determiner 123 sets the state to the state B.

At Step S9 subsequent to Step S8, the face direction detector 121 determines whether the detected face direction angle 202 is larger than the predetermined angle with the same method as in Step S3. When the face direction angle 202 is larger than the predetermined angle, it is determined that there is a possibility of a looking-back motion (Yes at Step S9), and Step S9 is repeated.

On the other hand, when the face direction angle 202 is equal to or smaller than the predetermined angle, it is determined that there in not a possibility of a looking-back motion (No at Step S9), and the process proceeds to Step S10. At Step S10, the motion determiner 123 sets the state to the state A.

At Step S11 subsequent to Step S10, the motion determiner 123 determines whether the determination of a looking-back motion is to be ended. When the driver P1 has got off the vehicle or when there is an instruction to end the determination of a looking-back motion from the driver P1, for example, the motion determiner 123 ends the determination of a looking-back motion (Yes at Step S11).

On the other hand, when the determination of a looking-back motion is not ended (No at Step S11), the process returns to Step S1.

Next, along with Fig. 6, the description will be made for a detection result of face direction from the face direction detector 121, a detection result of body parts (body portion) from the body portion detector 122, and a transition of state setting performed by the motion determiner 123 in a case where a looking-back motion is determined in accordance with the flow diagram illustrated in Fig. 5. In Fig. 6, G1 is a graph indicating a detection result of face direction and G2 is a graph indicating a detection result of body parts. "0" and "1" in the graphs of G1 and G2 represent presence or absence of detection.

The detection result of face direction is "1" when the face direction angle 202 is larger than the predetermined angle and "0" when the face direction angle 202 is equal to or smaller than the predetermined angle. The detection result of body parts is "1" when presence of the predetermined object is detected in the predetermined region 30 and "0" when presence of the predetermined object is not detected in the predetermined region 30.

The motion determiner 123 sets three states of the state A, the state B, and the state C based on the combination of the detection results from the face direction detector 121 and the body portion detector 122, as indicated in Fig. 6(b). It should be noted that Fig. 6(a) illustrates an actual motion of the driver, and in Fig. 6, the horizontal axis indicates times.

Between a time t0 and a time t1, after the state is set to the state A at Step S1, Step S2 and Step S3 are repeated, and thus, the state A is maintained.

When the driver P1 greatly rotates the head 40 at the time t1 and the face direction angle 202 becomes larger than the predetermined angle, the determination at Step S3 is "Yes" and the detection result of face direction changes from "0" to "1".

With this, the motion determiner 123 sets the state to the state B (Step S4). Furthermore, at Step S5 subsequent to Step S4, a determination is made whether presence of the predetermined object is to be detected in the predetermined region 30. Because the head 40 of the driver P1 is located in front of the head rest 20a between the time t1 and a time t2, the determination at Step S5 is "No" and the detection result of body parts is still "0". The motion determiner 123 thus maintains the state B until the time t2.

At the time t2, when the driver P1 makes a looking-back motion and the head 40 of the driver P1 enters in the predetermined region 30, the determination at Step S5 is "Yes" and the detection result of body parts changes from "0" to "1".

With this, the motion determiner 123 sets the state to the state C (Step S6). During the time when the motion determiner 123 sets the state to the state C, in the device controller which is not illustrated, an application for back-side checking, for example, is executed.

At a time t3, when the head 40 of the driver P1 is not present in the predetermined region 30 anymore, the determination at Step S7 is "No" and the detection result of body parts changes from "1" to "0".

With this, the motion determiner 123 sets the state to the state B (Step S8). Furthermore, at Step S9 subsequent to Step S8, presence or absence of a possibility of a looking-back motion is determined. Because the face direction angle 202 is larger than the predetermined angle between the time t3 and a time t4, the determination at Step S9 is "Yes" and the detection result of face direction is still "1". The motion determiner 123 thus maintains the state B until the time t4.

At the time t4, when the driver P1 looks ahead, the face direction angle 202 becomes equal to or smaller than the predetermined angle, the determination at Step S9 is "No", and the detection result of face direction changes from "1" to "0". With this, the motion determiner 123 sets the state to the state A (Step S10).

Furthermore, when the driver P1 has got off the vehicle at a time t5, the determination at Step S11 is "Yes", and the determination of a looking-back motion is ended.

The state set by the motion determiner 123 thus transits in the order of the state A, the state B, the state C, the state B, and then the state A in accordance with the results from the face direction detector 121 and the body portion detector 122, as illustrated in Fig. 6.

As described above, according to the determination apparatus 100 in the present embodiment, when the face direction detector 121 has determined that there is a possibility of a looking-back motion and the body portion detector 122 has detected presence of the predetermined object in the predetermined region 30, the motion determiner 123 determines a looking-back motion of the driver P1.

According to the determination apparatus 100 in the present embodiment, the face direction detector 121 detects a face direction unique to a looking-back motion and the body portion detector 122 further detects a position of the body, so that a determination of a looking-back motion of the driver P1 is made based on both of the detection results of face direction (or head pose) and body parts (body portion). With this, a looking-back motion of the driver P1 can be determined even when there is a looking-back motion accompanied by a great rotation of the head.

An embodiment of the present disclosure has been described above. However, the present disclosure is not limited to the description of the embodiment. Modifications will be described below.

### <Modification 1>

In the above-described embodiment, the predetermined region 30 has a rectangular parallelepiped shape the size of which corresponds to the head 40 of the driver P1 and is set to one position right beside or 10 cm rear, for example, of right beside the head rest 20a of the driver's seat 20. However, the size, the shape, the position, and the number of the predetermined region 30 are not limited thereto,

For example, the size of the predetermined region 30 may be a size covering both of the head and the shoulder of the driver P1. However, when the predetermined region 30 is too large, there is a possibility that a person other than the driver P1 or an object is erroneously detected. The size of the predetermined region 30 thus is preferably decided to be an appropriate size based on an experiment, for example.

The shape of the predetermined region 30 may be a shape matching the shape of a space through which the head surface of the driver P1 passes when the driver P1 looks back, for example, a columnar shape.

The position of the predetermined region 30 may be set in accordance with the physique, habit in looking back, or position and/or inclination of the seat of the driver P1.

As the predetermined region, in addition to a first region in which the head 40 of the driver P1 is detected, a second region in which an upper limb of the driver P1 is detected may be set to a position apart from the first region or adjacent to the first region.

### <Modification 2>

In the above-described embodiment, the body parts detector 122 determines that the head 40 of the driver P1 is present in the predetermined region 30 upon detecting presence of the predetermined object in the predetermined region 30. However, the method of detecting a body parts with the body parts detector 122 is not limited thereto.

For example, in an aspect, if an existing technique of detecting the skeleton of a person is used to detect the position of the head and/or the shoulder of the driver P1 in advance, and the detected position of the head and/or the shoulder of the driver P1 is collated with the detected position of the object in the predetermined region, the object included in the predetermined region 30 can be identified to be the head and/or the shoulder. This enables prevention of an erroneous detection.

Furthermore, in the above-described embodiment, when the detected face direction angle (or head pose) is larger than the predetermined angle, the face direction detector 121 determines that there is a possibility of a looking-back motion. However, the method of determining a possibility of a looking-back motion is not limited thereto. For example, when an existing technique of detecting the skeleton can be used to identify the position of a body parts including the both shoulders of the driver P1, a straight line connecting the both shoulders and the angle with the advancing direction of the vehicle may be calculated so that the direction of the body is detected. If the orientation of the body is detected in addition to the face direction angle, the face direction detector 121 can more appropriately determine a possibility of a looking-back motion of the driver P1.

### <Modification 3>

In the above-described embodiment, the face direction detector 121 determines whether the face direction angle of the driver P1 is larger than the predetermined angle. However, the method of detecting a face direction with the face direction detector 121 is not limited thereto.

For example, the face direction detector 121 may determine that the face direction angle 202 is larger than the predetermined angle when a duration of a time at which the face direction angle 202 is larger than a predetermined angle is equal to or longer than a predetermined duration.

With this, when the driver P1 greatly rotates the head only for an instant, the face direction detector 121 does not determine that there is a possibility of a looking-back motion. Only when the driver P1 continues to greatly rotate the head for the predetermined duration, the face direction detector 121 determines that there is a possibility of a looking-back motion. This enables prevention of an erroneous determination of a possibility of a looking-back motion when the driver P1 has greatly rotated the head only for an instant and then returned the head. This configuration improves determination accuracy of presence or absence of a possibility of a looking-back motion.

Furthermore, with this configuration, the present disclosure is applicable to an application in which a case is assumed where the driver P1 maintains a state of rotating the head for more than a certain degree of duration.

### <Modification 4>

In the above-described embodiment, the face direction detector 121 determines presence or absence of a possibility of a looking-back motion of the driver P1. However, details of control performed by the face direction detector 121 are not limited thereto. For example, in addition to presence or absence of a possibility of a looking-back motion of the driver P1, the face direction detector 121 may determine the degree of the looking-back motion of the driver P1.

Specifically, based on the detected face direction angle 202, the face direction detector 121 determines that the degree of the looking-back motion is small when the face direction angle 202 is small, and determines that the degree of the looking-back motion is large when the face direction angle 202 is large. The degree of the looking-back motion may be determined in stages, and may be determined continuously.

When the face direction angle 202 of the driver P1 is larger than the predetermined angle, in addition to the determination result that there is a possibility of a looking-back motion of the driver P1, the face direction detector 121 outputs the degree of the looking-back motion to the motion determiner 123.

With this, in addition to the determination of a looking-back motion of the driver P1, the motion determiner 123 can determine the degree of the looking-back motion of the driver P1, whereby appropriate control can be performed in accordance with the degree of the looking-back motion in the device controller. For example, when it is determined that the degree of the looking-back motion is large, an application for back-side checking may be executed, and when it is determined that the degree of the looking-back motion is small, an application for right-, left-, and back-sides checking may be executed.

### <Modification 5>

In the above-described embodiment, descriptions are made taking an example in which the head or the shoulder is used as the predetermined body parts. However, the predetermined body parts is not limited to the head or the shoulder.

The predetermined body parts may be any portion in which a motion is caused in conjunction with a looking-back motion, and may be an entire upper limb from the shoulder to the fingertip, or a part or the entire upper half of the body.

An embodiment and modifications of the present disclosure have been described above.

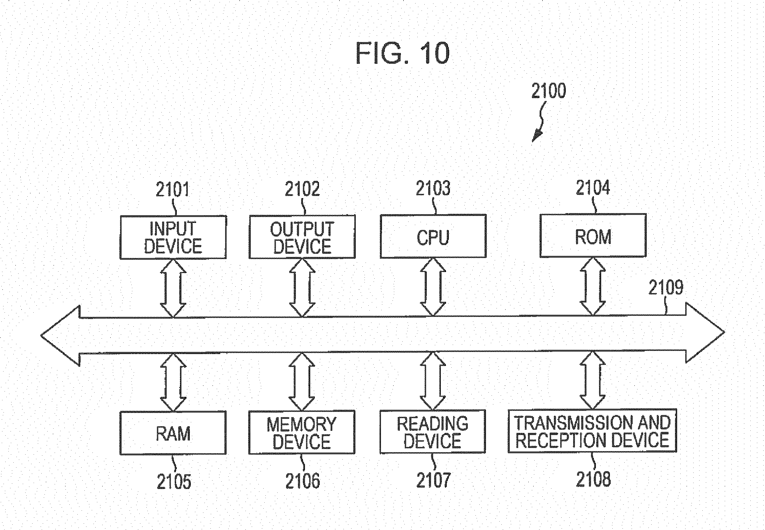

Fig. 10 is a diagram illustrating a hardware configuration of a computer implementing a function of each unit in the above-described embodiment and modifications with a program.

As illustrated in Fig. 10, a computer 2100 includes an input device 2101 such as an input button or a touchpad, an output device 2102 such as a display or a speaker, a central processing unit (CPU) 2103, a read only memory (ROM) 2104, and a random access memory (RAM) 2105. The computer 2100 further includes a memory device 2106 such as a hard disk device or a solid state drive (SSD), a reading device 2107 that reads out information from a recording medium such as a digital versatile disk read only memory (DVD-ROM) or a universal serial bus (USB) memory, and a transmission and reception device 2108 that performs communication via a network. The units described above are connected using a bus 2109.

From a recording medium in which a program for implementing functions of the above-described units is recorded, the reading device 2107 reads out the program and causes the memory device 2106 to store the program. Alternatively, the transmission and reception device 2108 performs communication with a server device connected to a network and causes the memory device 2106 to store a program for implementing functions of the above-described units which has been downloaded from the server device.

The CPU 2103 copies the program stored in the memory device 2106 into the RAM 2105, and sequentially reads out commands included in the program from the RAM 2105 and executes the commands, whereby the functions of the above-described units are implemented. Furthermore, when the program is executed, information, which has been obtained through various processes described in the embodiment and modifications, is stored in the RAM 2105 or the memory device 2106, and is used as appropriate.

The determination apparatus, the determination method, and the recording medium storing a determination program according to the present disclosure are effective for determining a looking-back motion of a person.

## Claims

1. A determination apparatus comprising:
an inputter that receives image information captured by a camera; and
a controller that detects a face direction angle of a person while detecting a position of a predetermined body parts of the person based on the image information, and determines a looking-back motion when the face direction angle is larger than a predetermined angle and the predetermined body parts is present in a predetermined position.

2. The determination apparatus according to Claim 1, wherein
when the predetermined body parts is present in a predetermined region set in advance, the controller determines that the predetermined body parts is present in the predetermined position.

3. The determination apparatus according to Claim 2, wherein
as the predetermined region, a plurality of regions are set.

4. The determination apparatus according to Claim 1, wherein
the predetermined body parts includes at least either one of the head or the shoulder.

5. The determination apparatus according to Claim 1, wherein
when a duration of a time at which the face direction angle is larger than a predetermined angle is equal to or longer than a predetermined duration, the controller determines that the face direction angle is larger than the predetermined angle.

6. The determination apparatus according to Claim 1, further comprising:
an outputter that outputs a result of determination at the controller.

7. A determination method comprising:
receiving image information captured by a camera; and
detecting a face direction angle of a person while detecting a position of a predetermined body parts of the person based on the image information, and determining a looking-back motion when the face direction angle is larger than a predetermined angle and the predetermined body parts is present in a predetermined position.

8. A non-transitory computer-readable recording medium storing a determination program executed in a determination apparatus that determines a looking-back motion of a person, the recording medium storing a determination program that causes a computer to execute:
receiving image information captured by a camera; and
detecting a face direction angle of a person while detecting a position of a predetermined body parts of the person based on the image information, and determining a looking-back motion when the face direction angle is larger than a predetermined angle and the predetermined body parts is present in a predetermined position.
